# EUROPÄISCHE PATENTSCHRIFT

(11) **EP 3 327 462 B1**
(45) Veröffentlichungstag und Bekanntmachung des Hinweises auf die Patenterteilung: **27.05.2020**
(21) Anmeldenummer: 17198922.1
(22) Anmeldetag: 27.10.2017
(51) Int. Cl.: G01V 8/12, G01S 7/491

(54) **OPTOELEKTRONISCHER SENSOR UND VERFAHREN ZUR ERFASSUNG VON OBJEKTINFORMATIONEN**
OPTOELECTRONIC SENSOR AND METHOD FOR DETECTING OBJECT INFORMATION
CAPTEUR OPTOÉLECTRONIQUE ET PROCÉDÉ DE DÉTECTION D'INFORMATIONS D'OBJET

(30) Priorität: 24.11.2016 DE 102016122712
(43) Veröffentlichungstag der Anmeldung: 30.05.2018
(73) Patentinhaber: SICK AG, 79183 Waldkirch (DE)
(72) Erfinder: HOFMANN, Christoph, 79194 Gundelfingen (DE); KRÄMER, Joachim, 79189 Bad Krozingen (DE); SIGMUND, Herr Jörg, 79341 Kenzingen (DE)

(56) Entgegenhaltungen:
- EP-A1- 1 947 477
- EP-A1- 2 189 805
- EP-A1- 2 924 477
- DE-A1- 4 415 944
- Anonymous: "Extension tubes in macro photography", , 10 November 2014 (2014-11-10), XP055588034, Retrieved from the Internet: URL:https://web.archive.org/web/2014111001 0717/http://www.coinimaging.com/extension. html [retrieved on 2019-05-13]
- Nikolaos Laskaris: "Vignetting", , 19 December 2011 (2011-12-19), XP055590624, Retrieved from the Internet: URL:http://homepages.inf.ed.ac.uk/rbf/CVon line/LOCAL_COPIES/AV0809/laskaris.pdf [retrieved on 2019-05-21]

## Beschreibung

Die Erfindung betrifft einen optoelektronischen Sensor und ein Verfahren zur Erfassung von Objektinformationen nach dem Oberbegriff von Anspruch 1 beziehungsweise 12.

Zahlreiche optoelektronische Sensoren erzeugen ein Empfangssignal aus einem Lichtfleck auf ihrem Lichtempfänger und werten dieses aus. In der Regel handelt es sich um einen Lichtfleck eines zugehörigen Lichtsenders. In manchen Sensoren wie Einweglichtschranken ist der Lichtsender mit Abstand montiert. Bei Reflexionslichtschranken oder Sensoren nach dem Tastprinzip befindet sich der Lichtsender bei dem Lichtempfänger. Es wird ein Lichtstrahl in den Überwachungsbereich ausgesandt und der von Objekten oder einem eigens aufgestellten Reflektor zurückgeworfene Lichtstrahl wieder empfangen. Durch Bestimmung der Lichtlaufzeit kann dabei auch der Abstand gemessen werden. Eine Abstandsmessung ist auch durch Triangulation möglich, wobei Lichtsender und Lichtempfänger in einem Basisabstand versetzt angeordnet sind, so dass der Lichtfleck abstandsabhängig über den Lichtempfänger wandert. Die bisher genannten eindimensionalen Sensoren sind auf Flächen- oder Raumabtastung erweiterbar, beispielsweise durch Mehrfachanordnung wie in einem Lichtgitter oder durch Bewegen des Lichtstrahls wie in einem Laserscanner.

Viele optische Sensoren sind einer großen Empfangsdynamik ausgesetzt, d.h. die Intensität des Lichtflecks schwankt innerhalb der Messszene erheblich. Dabei spielen insbesondere sich ändernde Messabstände und Remissionen des jeweiligen remittierenden Objekts eine Rolle. Zwischen einem fernen, dunkeln Objekt und einem nahen, spiegelnden oder glänzenden Objekt mit entsprechendem Auftreffwinkel liegen mehrere Dekaden. Für eine zuverlässige Messung sollen Sensoren einen möglichst großen Dynamikbereich abdecken. Praktisch ist dieser Bereich am unteren Ende durch das Rauschen begrenzt und am oberen Ende durch Übersteuerungseffekte oder Sättigung begrenzt.

Es sind eine Reihe von herkömmlichen Maßnahmen bekannt, um den Dynamikbereich zu erweitern. Eine Stellgröße ist die Verstärkung (Gain) des Lichtempfängers, mit der die Empfindlichkeit verändert wird. Damit verstellt man jedoch gleichzeitig die Geschwindigkeit beziehungsweise Flankensteilheit des Empfangssignals, und das hat bei vielen Lichtlaufzeitverfahren unerwünschte Auswirkungen auf die gemessene Entfernung. Eine weitere Maßnahme auch bei jeweils gegebener Empfindlichkeit des Lichtempfängers ist die Einstellung der Belichtungszeit oder des Zeitpunkts der Detektion (gating). Das ist ebenfalls bei Lichtlaufzeitverfahren problematisch, da sich hierdurch eine Geschwindigkeitsänderung des Empfangssignals ergeben kann. Außerdem sind gerade bei hochintegrierten Lichtempfängern die genannten Parameter oft gar nicht zugänglich, und das Umkonfigurieren der Sensorparameter erfordert Zeit.

Weiterhin ist denkbar, mechanische Blenden (Shutter) zu verwenden, um die auf den Lichtempfänger treffende Leistung anzupassen. Das vermeidet die genannten Probleme. Die mechanischen Blenden, etwa Irisblenden, sind jedoch sehr träge, so dass das nötige Anpassen des Blendendurchmessers eine Latenzzeit mit sich bringt, die größer als die angestrebte Messrate des Sensors ist. Außerdem wird der angestrebte Blendendurchmesser oft nicht mit der nötigen Präzision eingestellt.

Eine situative Anpassung der Lichtintensität ist auch sendeseitig möglich. Dazu wird die Leistung des Lichtsenders verändert. Bei Pulsverfahren wird dazu nicht unbedingt die Amplitude der Pulse, sondern die Pulslänge oder das Puls/Pausen-Verhältnis verändert. Wiederum kann bei Lichtlaufzeitsensoren eine Anpassung der Sendeleistung oder des Pulsverhaltens eine Änderung der Flankensteilheit hervorrufen und das Messergebnis verändern. Eine Veränderung des Puls/Pausenverhältnisses ist je nach Messverfahren gar nicht ohne weiteres möglich, da dieses Verhältnis unter Umständen Informationen für die Lichtlaufzeitmessung trägt. Außerdem kann es bei gepulsten Betriebsmodi mit sehr hohen Repetitionsfrequenzen vorkommen, dass das nötige Umkonfigurieren eine Latenzzeit mit sich bringt, die für die angestrebte Messrate des Sensors zu langsam ist. Für Sensoren, die in der Sicherheitstechnik zur Überwachung einer Gefahrenquelle eingesetzt sind und diese bei Erkennung einer Gefahr in einen sicheren Zustand verbringen, sind bestimmte Performancelevel in der EN 13849 beziehungsweise Safety Integrity Level (SIL) in der EN 61508 normiert. Deren Einhaltung auch bei Umkonfigurieren kann eine Überprüfung mit zeitaufwändigen Testroutinen erfordern.

In nahezu jedem optischen Sensor ist eine Sende- beziehungsweise Empfangsoptik mit optischen Elementen wie Linsen vorgesehen. Häufig wird diese Optik mit Hilfe einer Fokusverstellung auf einen bestimmten Abstand oder Abstandsbereich scharf eingestellt, indem elektromechanisch oder optomechanisch die Position der Linsen und damit die Bildschnittweite der Sende- oder Empfangsoptik verstellt wird. Alternativ sind auch Flüssiglinsen bekannt, die zur Fokusverstellung direkt die Brennweite verändern.

Aus der EP 1 947 477 A1 ist ein Triangulationssensor bekannt, der Entfernungen diversitär-redundant sowohl aus der Lage als auch der Form des Lichtflecks auf dem Lichtempfänger bestimmt. In einer Ausführungsform ist der Lichtempfänger gegenüber der Empfangsoptik unter bewusster Abweichung von einer Scheimpflug-Ausrichtung intrafokal verkippt.

Aus EP 2 924 477 ist eine optoelektronische Vorrichtung und ein Verfahren zur Erfassung von Objektinformationen bekannt, wobei die Vorrichtung eine adaptive Linse aufweist, bevorzugt eine Flüssig- oder Gellinse, welche durch Verkippen in unterschiedliche Kippstellungen gebracht werden kann, wodurch die Vorrichtung wiederholt neu ausgerichtet werden kann.

In "Vignetting" von N. Laskaris (2011) wird der Abbildungsfehler "Vignettierung" besprochen, und mögliche Maßnahmen zu dessen Kompensation diskutiert.

In einer Weiterbildung von Flüssiglinsen zur Fokusverstellung schlägt die EP 2 071 367 A1 vor, auch die Verkippung der Flüssiglinse durch Anlegen unterschiedlicher Spannungen in Umlaufrichtung zu verändern. Das dient in einer Kamera dazu, die Aufnahme verwackelter Bilder zu verhindern, indem die Eigenbewegung der Kamera ermittelt und die Flüssiglinse verkippt wird, um dieser Eigenbewegung entgegenzuwirken.

In der DE 10 2005 015 500 A1 wird ein weiterer optoelektronischer Sensor mit einer Flüssiglinse offenbart, die durch einen asymmetrischen Rahmen oder unterschiedliche elektrische Potentiale an separaten Elektroden des Linsenrahmens in ihren Strahlformungseigenschaften asymmetrisch veränderbar ist. Das Dokument erläutert dann aber nicht, wozu das genutzt werden kann.

Vor diesem Hintergrund ist Aufgabe der Erfindung, einen optoelektronischen Sensor in einem variablen Messumfeld einsetzen zu können.

Diese Aufgabe wird durch einen optoelektronischen Sensor und ein Verfahren zur Erfassung von Objektinformationen nach Anspruch 1 beziehungsweise 12 gelöst. Auf einem Lichtempfänger wird mittels einer Empfangsoptik ein Lichtfleck erzeugt, und das entsprechende Empfangssignal wird ausgewertet. Die Erfindung geht nun von dem Grundgedanken aus, zur Dynamikanpassung durch gezielte Dejustage dafür zu sorgen, dass sich der Anteil des Lichtflecks ändert, der auf den Lichtempfänger trifft. Dementsprechend ändert sich der Pegel des Empfangssignals. Dazu ist eine Manipulationseinheit vorgesehen, welche Empfangsoptik, Lichtempfänger und/oder Elemente der Empfangsoptik variiert. Damit ist eine physische Manipulation gemeint, also eine Bewegung oder Verformung. Vorzugsweise werden die Empfangsoptik und/oder der Lichtempfänger bewegt, um die relative Lage zu verändern. Dabei meint Lage allgemein eine 6D-Lage mit Position und Drehstellung, wobei mindestens einer dieser Freiheitsgrade manipuliert wird. Alternativ oder zusätzlich werden Elemente der Empfangsoptik beziehungsweise optisch aktive Flächen manipuliert, sei es durch Verschieben, Verkippen oder Verformen.

Die Manipulationen bewirken eine Änderung der Lage, Größe und/oder Geometrie des Lichtflecks. Über Manipulation der Lage trifft der Lichtfleck zu einem gewissen Anteil den Lichtempfänger und zu einem übrigen Anteil nicht. Über die Größe kann für ein mehr oder weniger ausgeprägtes Überstrahlen der Fläche des Lichtempfängers gesorgt werden. Ein Beispiel für eine Geometrieänderung mit Auswirkung auf den Anteil des auf den Lichtempfänger treffenden Lichtflecks ist eine Verformung von einem Kreis zu einer Ellipse, die dann auch bei gleichem Flächeninhalt nicht mehr auf den Lichtempfänger passt. Die Auswirkungen der Manipulation können sich kombinieren, etwa wenn eine Größenveränderung keine direkte Skalierung ist, sondern mit einer Verformung des Lichtflecks einhergeht.

Eine Dejustage kann den Pegel des Empfangssignals zunächst nur verringern. Die Erfindung ist jedoch auch nutzbar, um die Empfindlichkeit zu steigern. Dazu wird schon in einem Grundzustand des Sensors dafür gesorgt, dass der Lichtfleck nicht vollständig auf den Lichtempfänger trifft. Dadurch entsteht eine Reserve, die durch eine entsprechende Manipulation genutzt werden kann.

Die Erfindung hat den Vorteil, dass durch eine wohldefinierte Dejustage der Dynamikbereich erweitert wird. Wegen der gezielten Anpassbarkeit muss in der Energiebilanz nicht mehr der ungünstigste Fall angenommen werden. Dabei bleibt die Messgenauigkeit erhalten, insbesondere erfolgt nicht die bei einem Lichtlaufzeitverfahren ungünstige Änderung der Flankensteilheit, während eine Übersteuerung oder Sättigung vermieden wird. Trotz begrenzter Dynamik des Lichtempfängers kann der Sensor situativ an die jeweils herrschenden Umgebungsbedingungen angepasst und ideal genutzt werden, ohne den Lichtempfänger oder einen Lichtsender umkonfigurieren zu müssen. Die erfindungsgemäßen Maßnahmen können auch getroffen werden, wenn Einflussnahme auf die ausgesandte Lichtleistung oder Betriebsparameter des Lichtempfängers nicht möglich oder diese Möglichkeiten bereits ausgereizt sind. Da es weniger Situationen gibt, in denen Messungen nicht möglich sind, erhöht sich auch die Verfügbarkeit des Sensors, was gerade in der Sicherheitstechnik von großer Bedeutung ist. Die erfindungsgemäße Lösung ist sehr kompakt mit Abmessungen von wenigen Millimetern realisierbar. Es kann mit hohen Frequenzen manipuliert werden, die insbesondere eine typische Messfrequenz von 10-500 Hz abdeckt.

Der Sensor weist bevorzugt einen Lichtsender auf, dessen Licht den Lichtfleck erzeugt. Dies kann auf direktem Weg geschehen wie bei einer Einweglichtschranke oder nach einfacher oder mehrfacher Reflexion an Objekten oder Reflektoren. Auch der Lichtsender beziehungsweise dessen Sendeoptik kann manipuliert werden, um bei sonst gleichen Rahmenbedingungen einen in Lage, Größe und/oder Geometrie veränderten Lichtfleck auf dem Lichtempfänger zu erhalten. Allerdings beeinflusst das auch die Messung. Ein breiterer Sendelichtstrahl beispielsweise beleuchtet zusätzliche Teilbereiche des Überwachungsbereichs und vergrößert den Sichtbereich der Empfangsoptik. Dadurch können Objekte Einfluss auf die Messung nehmen, die ohne die Manipulation keine Wirkung auf den Sendelichtstrahl hätten, und außerdem verschlechtert sich die Objektauflösung.

Die Manipulationseinheit ist bevorzugt dafür ausgebildet, den Anteil des Lichtflecks entsprechend einem Dämpfungsfaktor einzustellen. Demnach ist ein Modell, eine Tabelle oder dergleichen hinterlegt, welches das Ausmaß der Manipulationen mit dem Anteil des Lichtflecks verknüpft, der auf den Lichtempfänger trifft, und darüber mit einem Dämpfungsfaktor. Wie schon bemerkt, kann der Dämpfungsfaktor auch größer als eins sein, wenn der Lichtfleck schon in einem Grundzustand des Sensors den Lichtempfänger nur teilweise trifft. Die Verknüpfung zwischen dem gewünschten Dämpfungsfaktor und der dafür notwendigen Manipulation kann auch in der Auswertungseinheit erfolgen. Die entsprechende Auswertungsfunktionalität wird dann als Teil der Manipulationseinheit aufgefasst, obwohl die eigentliche Manipulationseinheit eine reine Aktorik ist.

Die Auswertungseinheit ist bevorzugt für eine Pegelmessung des Empfangssignals ausgebildet. Dazu wird beispielsweise die maximale Amplitude oder bei einem gepulsten System das Integral eines Empfangspulses bestimmt. Durch die Pegelmessung kann festgestellt werden, ob das Empfangssignal zu schwach oder übersteuert ist, und gegebenenfalls mittels der Manipulationseinheit reagiert werden. Der Anteil des Lichtflecks, der auf dem Lichtempfänger auftrifft, ist einer von mehreren Faktoren, der den Pegel bestimmt.

Die Auswertungseinheit weist bevorzugt eine Regelung auf, um den Pegel in einem Aussteuerungsbereich zu halten. Damit wird die erfindungsgemäße gezielte Dejustage mittels der Manipulationseinheit genutzt, um das Empfangssignal in einem von dem Lichtempfänger erfassbaren Dynamikbereich zu halten. Der Aussteuerungsbereich kann dem maximalen Dynamikbereich des Lichtempfängers entsprechen, aber auch deutlich kleiner bis hin zu einem Zielwert sein. Besonders bevorzugt erfolgt jeweils eine Regelung auf den Pegel der vorhergehenden Messung. Das sorgt beispielsweise in einem Pulsverfahren für gleichartige Empfangspulse. In einem Grundzustand ist der Sensor durch Bauweise, Parametrierung, Einlernen, Justage und dergleichen so eingerichtet, dass der Pegel für eine gewünschte Anwendung, insbesondere Entfernung und Remission von Objekten im erfassbaren Dynamikbereich liegt. Die Regelung sorgt dafür, dass das auch bei veränderten Umgebungsbedingungen so bleibt. Aus der Einstellung der Manipulationseinheit, insbesondere der Vorgabe der Regelung im eingeregelten Zustand, kann geschlossen werden, welcher Anteil des Lichtflecks den Lichtempfänger trifft und wie groß daher der Pegel des gesamten Lichtflecks wäre. Das ist zum Beispiel als aktuell verfügbare Reserve gegenüber weiter entfernten oder schwächer remittierenden Objekten interessant.

Die Auswertungseinheit ist bevorzugt dafür ausgebildet, eine Messung mehrfach bei verschiedenen mittels der Manipulationseinheit eingestellten Anteilen des den Lichtempfänger treffenden Lichtflecks durchzuführen. Anstelle einer Regelung wird hier mittels der Manipulationseinheit dafür gesorgt, dass jeweils ein geringer und ein hoher Anteil des Lichtflecks den Lichtempfänger trifft, demzufolge mit geringer und hoher Empfindlichkeit gemessen wird. Eine oder mehrere Zwischenstufen sind natürlich auch denkbar. Die Auswertung hat dann mehr Messinformation und kann beispielsweise die Messungen mitteln oder sich gut ausgesteuerte Messungen heraussuchen. Statt die jeweiligen Stellungen der Manipulationseinheit diskret anzufahren, kann auch eine periodische Manipulation etwa durch einen Sinus erfolgen und dann über entsprechenden Zeitversatz bei unterschiedlichen Einstellungen gemessen werden.

Die Manipulationseinheit ist bevorzugt für eine Fokusverstellung der Empfangsoptik, eine laterale Verschiebung und/oder eine Verkippung ausgebildet. Diese Maßnahmen führen einzeln oder in Kombination zum gewünschten Effekt auf den Lichtfleck. Eine Fokussierung oder vielmehr Defokussierung ist besonders gut für kurzbrennweitige Systeme geeignet. Es reicht dann nämlich bereits eine geringe Verstellung aus, um ein zufriedenstellendes Resultat zu erhalten. Der relevante Effekt einer lateralen Verschiebung ist die relative Position, so dass Empfangsoptik, Lichtempfänger oder beide verschoben werden können. Auch eine Verkippung sorgt dafür, dass der Lichtempfänger wie bei einer lateralen Verschiebung zu einem gewünschten Anteil verfehlt wird. Verkippt werden kann die Empfangsoptik, eines ihrer Elemente oder optisch wirksamen Flächen oder der Lichtempfänger.

Die Manipulationseinheit weist bevorzugt eine Tauchspule oder einen Piezoaktor auf. Damit ist je nach Ausführungsform eine Verschiebung längs der optischen Achse, also eine Defokussierung, oder lateral möglich, indem die Tauchspule oder der Piezoaktor die entsprechende Achse manipuliert. Eine Manipulation auf mehreren Achsen ist auch denkbar.

Die Manipulationseinheit weist bevorzugt eine adaptive Linse auf. Die soeben genannten Manipulationseinheiten können die Bildschnittweite verändern, gegebenenfalls auch die Brennweite eines Mehrlinsensystems. Eine adaptive Linse dagegen verstellt direkt die Krümmung ihrer optisch wirksamen Flächen und damit ihre Brennweite, und zwar sehr schnell innerhalb von Millisekunden. Derartige adaptive Linsen sind robust, zuverlässig, erschütterungs- und langzeitstabil, bieten ausreichende optische Qualität für verschiedene Wellenlängen, erfordern nur minimalen Stromverbrauch und weisen keine beweglichen Teile auf.

Die adaptive Linse ist bevorzugt eine Flüssiglinse oder eine Gellinse. Solche Linsen bieten die gewünschten Einstellmöglichkeiten und sind dabei sehr bauklein und kostengünstig. Noch bevorzugter ist die adaptive Linse auch verkippbar. Das bezieht sich auf die optische Wirkung, die ein einfallendes Lichtbündel in eine einstellbare Richtung austreten lässt. Dazu weist die adaptive Linse beispielsweise in Umlaufrichtung segmentierte Ansteuerelemente auf. Das können segmentierte Elektroden sein, die eine Flüssiglinse über den Elektrobenetzungseffekt steuern. Denkbar sind weiterhin segmentierte Aktoren, insbesondere Piezoaktoren, die den Druck auf eine Flüssigkeit lokal verändern und dadurch eine Membran auf Flüssigkeit unterschiedlich krümmen, oder die direkt eine gelartige Substanz der Linse verformen. Durch die Segmentierung in Umlaufrichtung wird eine nicht rotationssymmetrische Beeinflussung der Linse ermöglicht, die zu der optischen Verkippung führt.

Eine weitere Alternative zu Tauchspulen, Piezoaktoren oder Flüssiglinsen sind andere Aktoriken, um ein Element auf einer Achse zu verschieben oder zu verkippen. Möglich sind auch Mikrospiegel (DMD, digital micromirror device), die jedoch vergleichsweise teuer sind.

Der Lichtempfänger ist bevorzugt als eine Zeile mit mehreren Lichtempfangselementen ausgebildet, und die Manipulationseinheit ist für eine Verschiebung oder Verformung des Lichtflecks quer zu der Zeile ausgebildet. Die Manipulation sollte natürlich nach Möglichkeit nicht zu einem Übersprechen zwischen den Lichtempfangselementen führen, da dies die Messung verfälscht. Quer zu der Zeile ist jedoch Raum, um dafür zu sorgen, dass Anteile des Lichtflecks das jeweilige Lichtempfangselement verfehlen. Die Ausgestaltungsmöglichkeiten für die Manipulationseinheit sind abgesehen von der Vorzugsrichtung quer zur Zeile gleich. Die Vorzugsrichtung lässt sich unter anderem durch Begrenzung einer lateralen Verschiebung oder Verkippung auf eine Richtung sowie Verformung oder Defokussierung durch zylindrische Linsen erreichen.

Der Lichtempfänger ist bevorzugt als Matrix von Lichtempfangselementen ausgebildet, und die Empfangsoptik weist ein Mikrolinsenfeld auf. Hier sind nicht alle Manipulationen geeignet, zumindest eine laterale Verschiebung und auch eine Defokussierung durch Abstandsänderung sind aber möglich. Außerdem ist der Spielraum für Manipulationen geringer. Der Füllfaktor, d.h. das Verhältnis von lichtempfindlicher Fläche zu Gesamtfläche der Pixel, erreicht jedoch in einem Matrixlichtempfänger nicht 100%. Es gibt also Totbereiche, in denen zumindest gewisse Lichtanteile durch Dejustage gelenkt werden können, ohne dass Empfangslicht andere Lichtempfangselemente trifft.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Sensors mit der Möglichkeit einer gezielten Dejustage;
- Fig. 2: eine schematische Darstellung einer Sende-Empfangseinheit und ihres Strahlengangs zur Erläuterung einer gezielten Defokussierung mittels Flüssiglinse;
- Fig. 3: eine schematische Darstellung entsprechend Figur 2 zur Erläuterung einer gezielten Defokussierung mittels einer die Bildschnittweite verändernden Aktorik;
- Fig. 4: eine schematische Darstellung entsprechend Figur 2 zur Erläuterung einer gezielten lateralen Verschiebung des Lichtflecks; und
- Fig. 5: Darstellungen einer kippbaren Flüssiglinse, welche die Richtung eines austretenden gegenüber einem einfallenden Lichtstrahl verändert.

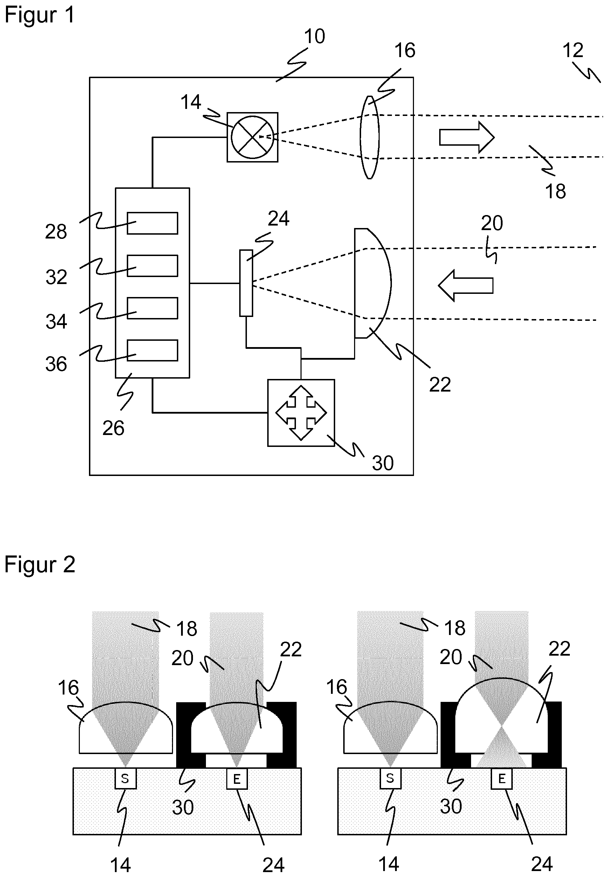

Figur 1 zeigt eine schematische Schnittdarstellung eines optoelektronischen Sensors 10 zur Erfassung von Objektinformationen aus einem Überwachungsbereich 12. Ein Lichtsender 14, beispielsweise eine LED oder ein Laser, sendet über eine Sendeoptik 16 einen Lichtstrahl 18 in den Überwachungsbereich 12. Der Lichtstrahl 18 kann kollimiert sein wie dargestellt, aber auch auf einen bestimmten Abstand fokussiert oder umgekehrt ein divergentes Strahlenbündel sein.

Trifft der Lichtstrahl 18 in dem Überwachungsbereich 12 auf ein Objekt oder einen Reflektor, so kehrt ein remittierter Lichtstrahl 20 zurück, der von einer Empfangsoptik 22 auf einen Lichtempfänger 24 geleitet wird. Die Empfangsoptik 22 ist als einfache Linse gezeigt, wobei dies eine Asphäre oder eine Freiformfläche sein kann. Es sind aber auch optische Systeme aus mehreren Linsen einschließlich einzelnen oder mehrfachen, insbesondere gekreuzten Zylinderlinsen, oder mit anderen optischen Elementen wie Blenden, Prismen, Spiegeln und dergleichen denkbar. Einzelne oder mehrere beteiligte Linsen können adaptive Linsen mit veränderbarer Brennweite sein. Die Empfangsoptik 22 kann auch insgesamt reflexiv ausgebildet sein und insbesondere bewegliche Spiegel oder Mikrospiegel aufweisen. Entsprechendes gilt für die Sendeoptik 16.

Als Lichtempfänger 24 dient vorzugsweise eine optische Halbleiterdiode, die durch den inneren Photoeffekt empfangene Photonen in einen elektrischen Strom umwandelt. Dafür kommen Photodioden (PD), Lawinenphotodiode (APD, Avalanche Photo Diode) oder Einzelphotonen-Lawinenphotodioden (SPAD, Single Photon Avalanche Photodiode) und ähnliche Empfangselemente in Frage. Dabei hat eine solche einzelne optische Halbleiterdiode für sich genommen kein räumliches Auflösungsvermögen, ihr Ausgangssignal gibt nur Aufschluss über die empfangene Lichtmenge. Die Ortsauflösung kann aber durch einen zeilen- oder matrixförmigen Lichtempfänger aus einer Vielzahl solcher optischer Halbleiterdioden erreicht werden.

Der remittierte Lichtstrahl 20 erzeugt einen Lichtfleck auf dem Lichtempfänger 24 und dadurch ein elektrisches Empfangssignal. Eine Auswertungseinheit 26 ist mit dem Lichtempfänger 24 verbunden und wertet das Empfangssignal in einer Objekterfassungseinheit 28 aus, um Objektinformationen zu gewinnen. Die Auswertungseinheit 26 nimmt zugleich Steuerungsfunktionalität wahr und ist mit dem Lichtsender 14 verbunden. Eine einfache Auswertung erkennt lediglich binär die An- oder Abwesenheit eines Objekts. Vorzugsweise ist der Sensor 10 entfernungsmessend ausgebildet. Dazu ist der ausgesandte Lichtstrahl 18 mit kurzen Pulsen moduliert, deren Laufzeit vom Aussenden bis zum Erfassen in dem Lichtempfänger 24 bestimmt wird. Alternativ wird eine Schwingung aufmoduliert und die Lichtlaufzeit über den Phasenversatz gemessen.

In dem Sensor ist weiterhin eine Manipulationseinheit 30 zur gezielten Dejustage im Empfangspfad vorgesehen, damit ein unterschiedlicher Anteil des Lichtflecks den Lichtempfänger 24 trifft. Dazu wirkt die Manipulationseinheit 30 vorzugsweise auf die Empfangsoptik 22, alternativ oder zusätzlich auf den Lichtempfänger 24 ein, um Lage, Drehstellung oder Form des ganzen Elements oder zumindest einer optisch wirksamen Grenzfläche zu verändern. Mögliche Ausgestaltungen der Manipulationseinheit 30 und deren Auswirkungen auf den Lichtfleck werden unten anhand der Figuren 2 bis 4 näher erläutert.

Korrespondierend zu der Manipulationseinheit 30 ist in der Auswertungseinheit 26 eine Manipulationssteuerung 32 vorgesehen. Damit werden für einen gewünschten Anteil des Lichtflecks, der den Lichtempfänger 24 treffen soll, die notwendigen Parameter und Befehle für die Manipulationseinheit 30 erzeugt. Die Manipulationseinheit 30 kann abweichend von der Darstellung auf den Lichtsender 14 beziehungsweise die Sendeoptik 16 wirken.

Aufgabe einer Pegelmessung 34 ist es, die Intensität des Lichts in dem auf den Lichtempfänger 24 treffenden Lichtfleck anhand des Empfangssignals zu bestimmen. Dazu wird vorzugsweise das Empfangssignal ausgewertet, beispielsweise dessen Integral oder Extremwerte. Insbesondere erkennt die Pegelmessung 34, wenn der Lichtempfänger 24 übersteuert oder das Empfangssignal so schwach ist, dass es im Rauschen untergeht, was durch eine gesetzte Rauschschwelle oder einen Vergleich mit dem Empfangssignal ohne Lichtfleck erkannt werden kann. Es ist außerdem bekannt, welcher Anteil des Lichtflecks jeweils auf den Lichtempfänger 24 fällt, da dies über die Dejustage mittels der Manipulationseinheit 30 eingestellt ist. Daraus kann auch der Gesamtpegel für den ganzen Lichtfleck einschließlich der Anteile hochgerechnet werden, die den Lichtempfänger 24 verfehlen.

Eine Regelung 36 nutzt das Ergebnis der Pegelmessung als Eingangsgröße, um mit Hilfe der Manipulationseinheit 30 das Empfangssignal in einem Aussteuerungsbereich zu halten. Einen gewissen Dynamikbereich kann bereits der Lichtempfänger 24 und die weitere Elektronik im Empfangspfad verarbeiten, etwa eine Verstärkerschaltung. Durch die Regelung 36 werden Empfangssignale verhindert, die für diesen Dynamikbereich der Elektronik zu stark oder zu schwach sind. Es ist auch möglich, das Empfangssignal nicht nur in dem Aussteuerungsbereich zu halten, sondern stets auf einen festen Pegel zu regeln, insbesondere denjenigen des zuletzt ausgewerteten Empfangssignals. Dadurch wird bei Pulslaufzeitverfahren ein Messfehler durch unterschiedliche Pulsformen oder Pulshöhen vermieden. Eine herkömmliche Korrektur für systematische Messabweichungen aufgrund von Remissionsänderungen, die beispielsweise eine Änderung der Flankensteilheit bewirken, ist dann nicht erforderlich.

Die Auswertungseinheit 26 umfasst gemäß Figur 1 die soeben angesprochene Objekterfassungseinheit 28, Manipulationssteuerung 32, Pegelmessung 34 und Regelung 36. Das ist rein funktional zu verstehen. Beispielsweise kann die Manipulationseinheit 30 nicht nur die Aktorik sein, sondern auch die Steuerungsfunktionalität aus einem Baustein der Auswertungseinheit 26 dorthin verschoben sein. Insgesamt kann die tatsächliche Implementierung in einem oder mehreren Digitalbausteinen und Schaltkreisen erfolgen, wie einem Mikroprozessor, FPGA (Field Programmable Gate Array) oder ASIC (Application-Specific Integrated Circuit).

Die Figur 1 zeigt einen Sensor 10, der als eindimensionaler Taster ausgebildet ist. Das ist nur eine Prinzipdarstellung, die stellvertretend für eine Vielzahl von Sensoren steht, die von der erfindungsgemäßen Dynamikanpassung profitieren. Zunächst können die optischen Pfade variiert werden, beispielsweise durch einen kollinearen Aufbau mit einem Strahlteiler. Der Lichtsender 14 kann in einem eigenen Gehäuse und auch im Abstand vorgesehen sein wie bei einer Einweglichtschranke, und der Sensor 10 kann auch ohne Lichtsender 14 auskommen. Der Lichtempfänger 24 kann als Empfängerzeile ausgebildet sein, beispielsweise um Entfernungen nach dem Triangulationsprinzip zu messen oder indem der Sensor 10 als hintergrundausblendender Taster (HGA-Taster) nur auf Objekte in einem bestimmten Entfernungsbereich reagiert. Auch ein Matrixempfänger ist denkbar. Ein nicht nur eindimensionaler Überwachungsbereich wird auch durch Weiterbildung als Lichtgitter oder Laserscanner ermöglicht. Alle diese Sensoren 10 können auch als sichere Sensoren im Sinne von Sicherheitsnormen wie der bereits genannten EN13849 ausgebildet sein.

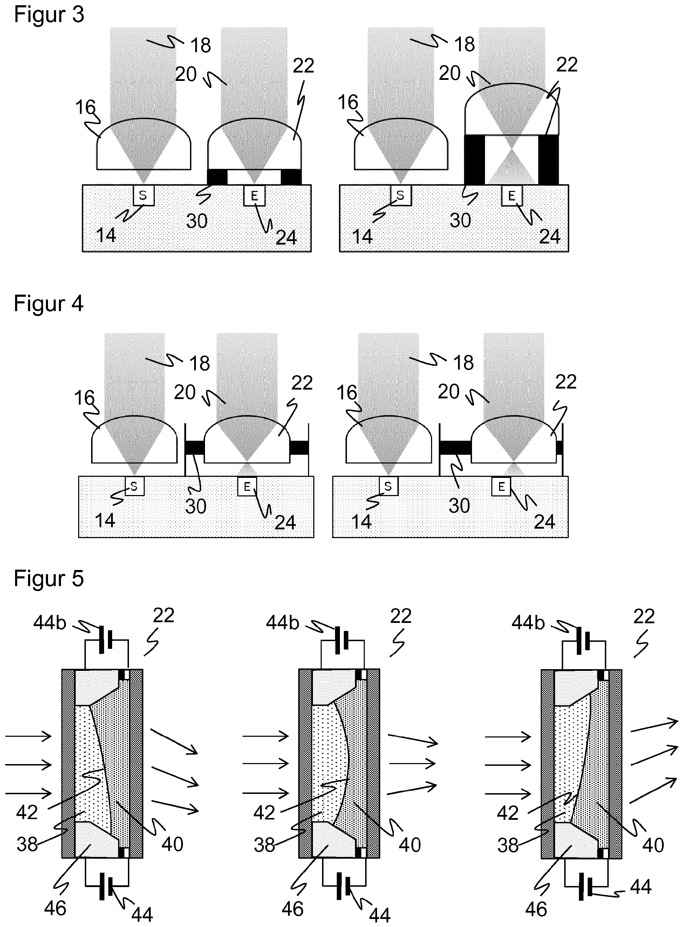

Die Figuren 2 bis 4 erläutern einige Möglichkeiten, wie die Manipulationseinheit 30 erreichen kann, dass der Lichtfleck den Lichtempfänger 24 nur zu einem gewünschten Anteil trifft und somit das durch weniger Licht erzeugte Empfangssignal abgeschwächt wird. Die kontrollierte Dejustage der optischen Bauelemente 22, 24 im Empfangspfad kann auf verschiedene Arten erreicht werden. Eine Möglichkeit ist eine (Auto-)Defokussierung entlang der optischen Achse, die in den Figuren 2 und 3 in zwei beispielhaften Ausführungsformen gezeigt ist. Eine andere Möglichkeit ist die laterale Verschiebung des Lichtflecks, die in einer Ausführungsform gemäß 4 durch laterales Verschieben der Empfangsoptik 22 erreicht wird. Die laterale Verschiebung des Lichtflecks kann auch durch ein Verkippen der Empfangsoptik oder einer optisch aktiven Fläche erreicht werden. Da es auf die relative Position ankommt, kann in anderen Ausführungsformen zusätzlich oder ausschließlich der Lichtempfänger 24 bewegt werden.

Die Manipulationseinheit 30 kann für eine wohldefinierte Dejustage unterschiedliche Technologien verwenden. Eine erste Möglichkeit bieten adaptive Linsen, insbesondere Flüssig- oder Gellinsen. In solchen adaptiven Linsen kann über eine elektrische Ansteuerung eine Linsenkontur verändert werden, wodurch die Brennweite binnen Mikrosekunden verstellt wird. Außerdem gibt es adaptive Linsen, die auch eine asymmetrische Formveränderung und damit effektiv eine Verkippung ermöglichen, die für ein laterales Verschieben des Lichtflecks genutzt werden kann. Solche adaptiven Linsen werden weiter unten anhand der Figur 5 erläutert.

Eine weitere Möglichkeit bieten alle Aktoren, die zu einer schnellen Verschiebung auf mindestens einer Achse in der Lage sind. Schnell bedeutet, dass vorzugsweise die Manipulation schnell genug für eine Messrate des Sensors 10 von beispielsweise 10-500Hz sind. Ein Beispiel dafür bildet ein Piezo-Aktor. Darin kann durch Anlegen einer elektrischen Spannung dank des piezoelektrischen Effekts gezielt die elastische Ausdehnung oder Kontraktion eines piezoelektrischen Materials erwirkt werden. Als weiteres Beispiel sei eine Tauchspule (Voicecoil) genannt.

Figur 2 zeigt eine schematische Darstellung des Strahlengangs von Lichtsender 14 und Lichtempfänger 24 zur Erläuterung der Dynamikanpassung durch Defokussieren einer Empfangsoptik 22 mit einer adaptiven Linse oder speziell einer Flüssiglinse, deren Brennweite die Manipulationseinheit 30 verstellen kann. Die Abweichung der Darstellung von Figur 1 soll nur der besseren Anschauung dienen und keine besonderen technischen Eigenschaften implizieren. Die dargestellte monolothische Sende-Empfangseinheit ist also nur ein Beispiel, Lichtsender 14 und Lichtempfänger 24 können auch getrennt und der remittierte Lichtstrahl 20 kann praktisch beliebigen Ursprungs auch ohne Lichtsender 14 sein.

Die Sendeoptik 16 umfasst hier beispielhaft eine einzige Sendelinse, die verschiedene Ausprägungen als sphärische, asphärische oder Freiformlinse haben kann. Die Ein- und Austrittsflächen können konvex, konkav oder plan sein. Vorzugsweise ist die Sendelinse optimal an die Messaufgabe angepasst. Die Sendelinse kann aus Glas oder Kunststoff hergestellt sein. Letzteres erlaubt zudem mehr gestalterischen Spielraum für optomechanische Aufgaben, da beispielsweise Haltevorrichtungen direkt aus Kunststoff gespritzt werden können.

Im Falle von genügender optischer Leistung muss die hier beispielhaft einzige Empfangslinse der Empfangsoptik 22 keine ideal angepasste Linsenkontur haben, da dann eine Etendue-Maximierung nicht zwingend ist. In diesem Fall kann als Empfangslinse eine Flüssiglinse eingesetzt werden, deren Linsenkontur sich elektronisch anpassen lässt.

Links in Figur 2 ist nun eine justierte Einstellung gezeigt, die für eine niedrige bis mittlere empfangene Lichtleistung geeignet ist. Dann führt dies zu einer Aussteuerung des Lichtempfängers 24, dessen Dynamikbereich soweit ausreicht. Rechts in Figur 2 ist die Empfangsoptik 22 durch eine Brennweitenanpassung der Flüssiglinse gezielt defokussiert. Diese Einstellung erfolgt bei hoher bis sehr hoher mittlerer empfangener Lichtleistung. Durch die geänderte Fokuslage vergrößert sich der Lichtfleck, und zwar in einem Maße, dass nur noch ein Anteil den Lichtempfänger 24 trifft. Somit kann durch Defokussieren die auf den Lichtempfänger 24 auftreffende Strahlungsmenge gezielt gesteuert werden. Es ist dadurch möglich, den Lichtempfänger 24 samt zugehöriger Elektronik mit begrenztem Dynamikbereich situativ an die jeweils herrschenden Umgebungsbedingungen anzupassen und ideal zu nutzen, ohne Lichtsender und/oder Lichtempfänger umkonfigurieren zu müssen. Die Defokussierung führt auch für höhere mittlere empfangene Lichtleistungen zu einer Aussteuerung des Lichtempfängers 24.

Figur 3 zeigt eine schematische Darstellung des Strahlengangs von Lichtsender 14 und Lichtempfänger 24 ähnlich Figur 2, jedoch wird hier eine Defokussierung nicht durch eine adaptive Linse, sondern durch Verstellen der Bildschnittweite erreicht.

Die Dynamikanpassung beziehungsweise das Leistungsregelungsprinzip ist analog. Links in Figur 3 ist die justierte Einstellung gezeigt, die für eine niedrige bis mittlere empfangene Lichtleistung geeignet ist und zu einer Aussteuerung des Lichtempfängers 24 führt. Rechts in Figur 3 ist die Empfangsoptik 22 bei hoher bis sehr hoher mittlerer Empfangsleistung durch Bewegen längs der optischen Achse gezielt defokussiert, und auch das führt dann zu einer Aussteuerung des Lichtempfängers 24.

Adaptive Linsen können unter Umständen aus Platz- oder Ansteuerungsgründen nicht verwendet werden. Gerade bei besonders herausfordernden Umgebungsbedingungen sollten sowohl Sendelinse als auch Empfangslinse optimal an die Messaufgabe angepasst sein. Dann ist eine Dynamikanpassung durch Deformation der Linsenkontur wie in einer Flüssiglinse weniger geeignet, denn die Empfangslinse verliert dabei ihre optimale Anpassung. Deshalb bleibt hier eine ideal angepasste Empfangsoptik 22 erhalten, und die Manipulationseinheit 30 für eine Defokussierung ist beispielsweise ein Piezo-Aktor oder eine Tauchspule, welche den Abstand zwischen Empfangsoptik 22 und Lichtempfänger 24 verstellt.

Figur 4 zeigt eine weitere denkbare Manipulation mit einer lateralen Verschiebung des Lichtflecks. Ansonsten sind Darstellung, mögliche Ausgestaltungen und Umgebungsbedingungen wie zu Figur 2 und 3 erläutert. In dem in Figur 4 gezeigten Beispiel wird die Empfangsoptik 24 lateral verschoben, etwa mit einem Piezo-Aktor oder einer Tauchspule. Es wurden oben bereits einige alternative Möglichkeiten genannt, um den Lichtfleck zu verschieben. Dazu kann ein optisches Element verkippt werden, etwa ein Spiegel, auch Mikrospiegel, ein Prisma, eine Linse oder nur die Linsenkontur einer adaptiven Linse. Auch der Lichtempfänger 24 kann alternativ oder zusätzlich verschoben oder verkippt werden.

Durch die laterale Dejustage und damit Bewegung des Lichtflecks wird zur Dynamikanpassung bei gleicher Fokuslage das Licht gezielt zum Teil an dem Lichtempfänger 24 vorbeigelenkt. Die Fokuslage kann zusätzlich manipuliert werden, sei es mit einer adaptiven Linse oder durch Manipulation der Bildschnittweite und einer dann möglicherweise ideal angepassten Empfangsoptik 22. Durch die Teilausleuchtung wird ein Übersteuern des Lichtempfängers 24 vermieden.

Links in Figur 4 ist wiederum eine justierte Einstellung gezeigt, die für eine niedrige bis mittlere empfangene Lichtleistung geeignet ist und zu einer Aussteuerung des Lichtempfängers 24 führt. Rechts in Figur 3 sorgt die Empfangsoptik 22 bei hoher bis sehr hoher mittlerer Empfangsleistung durch laterale Dejustage dafür, dass nur ein Teil des Lichtflecks den Lichtempfänger 24 trifft und der übrige Teil ihn verfehlt, um so weiterhin eine Aussteuerung des Lichtempfängers 24 zu erreichen.

Die anhand der Figuren 2 bis 4 beschriebenen Möglichkeiten der Dejustage, also Defokussierung und laterale Verschiebung mit verschiedenen Mitteln, können miteinander kombiniert werden. Wenn die Dejustage bei besonders anspruchsvollen Umgebungsbedingungen noch nicht genügt, um die Aussteuerung des Lichtempfängers 24 optimal zu gestalten, sind auch Kombinationen mit andern Maßnahmen denkbar, wie Anpassungen an dem Lichtsender 14, insbesondere dessen Lichtleistung beziehungsweise bei Pulsbetrieb Pulsamplitude, Pulslänge und/oder Pulswiederholfrequenz, oder weitere Anpassungen an dem Lichtempfänger 24, die nicht den optischen Empfangspfad, sondern die Elektronik betreffen, etwa Verstärkung, Vorspannung gerade bei SPADs oder Gating-Fenster.

Vorzugsweise sorgt die Regelung 36 dafür, dass über die Manipulationseinheit 30 die jeweils geeignete Dejustage präzise eingestellt wird. Vorteilhaft ist eine Kalibration der auf den Lichtempfänger treffenden optischen Strahlungsleistung. Geregelt werden kann auf die Signalhöhe der vorherigen Messung, die von einigen Lichtempfängern 24 direkt als Messwert ausgegeben und ansonsten über die Pegelmessung 34 bestimmt werden kann.

Abschließend werden noch anhand der Figur 5 einige Ausführungsformen einer adaptiven Linse erläutert, von denen eine oder mehrere als manipulierbare optische Komponente in der Empfangsoptik 22 oder auch der Sendeoptik 16 angeordnet sein können. Die dargestellte adaptive Linse ist eine Flüssiglinse nach dem Elektrobenetzungseffekt. Es gibt auch andere adaptive Linsen, etwa mit einer Flüssigkeitskammer und einer diese bedeckenden Membran, deren Wölbung durch Druck auf die Flüssigkeit verändert wird, oder Linsen mit einem gelartigen optisch durchlässigen Material, dass durch eine Aktorik mechanisch verformt wird.

Die Flüssiglinse weist zwei transparente, nicht mischbare Flüssigkeiten 38, 40 mit unterschiedlichen Brechungsindizes und gleicher Dichte auf. Die Form der Flüssigkeitsgrenzschicht 42 zwischen den beiden Flüssigkeiten 38, 40 wird zur optischen Funktion verwendet. Die Aktuierung basiert auf dem Prinzip der Elektrobenetzung, welche eine Abhängigkeit der Oberflächen- oder Grenzflächenspannung vom angelegten elektrischen Feld zeigt. Deshalb ist es möglich, die Form der Grenzschicht 42 und damit die optischen Eigenschaften der Flüssiglinse durch elektrische Ansteuerung an einem Anschluss 44a-b zu verändern, wodurch entsprechende Spannungen an einer Elektrode 46 anliegen.

Solche Steuerspannungen können die Kontur der Grenzschicht 42 rotationssymmetrisch verändern und darüber die Brennweite einstellen, je nach Bauform sogar bis hin zu einer konkaven Grenzschicht 42, also divergentem Verhalten. Die Flüssiglinse kann aber auch in ihrer Verkippung beeinflusst werden, was auf nicht rotationssymmetrisch angelegten Spannungen und damit elektrischen Feldern beruht. Dementsprechend wird die Grenzschicht 42 nicht rotationssymmetrisch verformt, was für die Verkippung ausgenutzt wird. Figur 5 zeigt links eine Verkippung der Flüssiglinse nach unten, in der Mitte eine rotationssymmetrische Einstellung ohne Verkippung zum Vergleich, und rechts eine Verkippung nach oben. Dabei bezieht sich die Richtung der Verkippung jeweils auf die optische Wirkung, also die Richtung, in welcher ein Lichtfleck über den Lichtempfänger 24 wandert. Der Verkippung kann jeweils durch entsprechende Krümmung der Grenzfläche 42 eine (De-)Fokussierung überlagert sein.

## Patentansprüche

1. Optoelektronischer Sensor (10) zur Erfassung von Objektinformationen aus einem Überwachungsbereich (12) mit einem Lichtempfänger (24), einer dem Lichtempfänger (24) zugeordneten Empfangsoptik (22) zum Erzeugen eines Lichtflecks auf dem Lichtempfänger (24), einer Auswertungseinheit (26) zum Erzeugen der Objektinformationen aus einem Empfangssignal des Lichtempfängers (24) und einer Manipulationseinheit (30), um Empfangsoptik (22), Lichtempfänger (24) und/oder Elemente der Empfangsoptik (22) so zu variieren, dass sich der Anteil des Lichtflecks ändert, der auf den Lichtempfänger (24) trifft,
**dadurch gekennzeichnet,**
**dass** die Manipulationseinheit (30) für eine gezielte Dejustage zur Dynamikanpassung durch Bewegen oder Verformen von Empfangsoptik (22), Lichtempfänger (24) und/oder Elementen der Empfangsoptik (22) ausgebildet ist und dass die Auswertungseinheit (26) eine Manipulationssteuerung (32) aufweist, um für einen gewünschten Anteil des Lichtflecks, der den Lichtempfänger (24) treffen soll, notwendige Parameter und Befehle für die Manipulationseinheit (30) zu erzeugen.

2. Sensor (10) nach Anspruch 1,
der einen Lichtsender (14) aufweist, dessen Licht den Lichtfleck erzeugt.

3. Sensor (10) nach Anspruch 1 oder 2,
wobei die Manipulationseinheit dafür (30) ausgebildet ist, den Anteil des Lichtflecks entsprechend einem Dämpfungsfaktor einzustellen.

4. Sensor (10) nach einem der vorhergehenden Ansprüche,
wobei die Auswertungseinheit (30) für eine Pegelmessung (34) des Empfangssignals ausgebildet ist.

5. Sensor (10) nach einem der vorhergehenden Ansprüche,
wobei die Auswertungseinheit (30) eine Regelung (36) aufweist, um den Pegel in einem Aussteuerungsbereich zu halten.

6. Sensor (10) nach einem der Ansprüche 1 bis 4,
wobei die Auswertungseinheit (26) dafür ausgebildet ist, eine Messung mehrfach bei verschiedenen mittels der Manipulationseinheit (30) eingestellten Anteilen des den Lichtempfänger (24) treffenden Lichtflecks durchzuführen.

7. Sensor (10) nach einem der vorhergehenden Ansprüche,
wobei die Manipulationseinheit (30) für eine Fokusverstellung der Empfangsoptik (22), eine laterale Verschiebung und/oder eine Verkippung ausgebildet ist.

8. Sensor (10) nach einem der vorhergehenden Ansprüche,
wobei die Manipulationseinheit (30) eine Tauchspule oder einen Piezoaktor aufweist.

9. Sensor (10) nach einem der vorhergehenden Ansprüche,
wobei die Manipulationseinheit (30) eine adaptive Linse, insbesondere eine Flüssiglinse aufweist.

10. Sensor (10) nach einem der vorhergehenden Ansprüche,
wobei der Lichtempfänger (24) als eine Zeile mit mehreren Lichtempfangselementen ausgebildet ist und die Manipulationseinheit (30) für eine Verschiebung oder Verformung des Lichtflecks quer zu der Zeile ausgebildet ist.

11. Sensor (10) nach einem der Ansprüche 1 bis 9,
wobei der Lichtempfänger (24) als Matrix von Lichtempfangselementen ausgebildet ist und die Empfangsoptik (22) ein Mikrolinsenfeld aufweist.

12. Verfahren zur Erfassung von Objektinformationen aus einem Überwachungsbereich (12), bei dem eine Empfangsoptik (22) einen Lichtfleck auf einem Lichtempfänger (24) erzeugt und ein Empfangssignal des Lichtempfängers (24) in einer Auswertungseinheit (26) ausgewertet wird, um die Objektinformationen zu gewinnen, wobei Empfangsoptik (22), Lichtempfänger (24) und/oder Elemente der Empfangsoptik (22) von einer Manipulationseinheit (30) so variiert werden, dass sich der Anteil des Lichtflecks ändert, der auf den Lichtempfänger (24) trifft,
**dadurch gekennzeichnet,**
**dass** für eine gezielte Dejustage zur Dynamikanpassung Empfangsoptik (22), Lichtempfänger (24) und/oder Elemente der Empfangsoptik (22) verformt oder bewegt werden und dass die Auswertungseinheit (26) eine Manipulationssteuerung (32) aufweist, in der für einen gewünschten Anteil des Lichtflecks, der den Lichtempfänger (24) treffen soll, notwendige Parameter und Befehle für die Manipulationseinheit (30) erzeugt werden.

## Claims

1. An optoelectronic sensor (10) for detecting object information from a monitored area (12), comprising a light receiver (24), receiving optics (22) associated with the light receiver (24) for generating a light spot on the light receiver (24), an evaluation unit (26) for generating the object information from a received signal of the light receiver (24) and a manipulation unit (30) for varying receiving optics (22), light receiver (24) and/or elements of the receiving optics (22) in such a way that the part of the light spot impinging on the light receiver (24) changes, **characterized in that** the manipulation unit (30) is configured for an intended misalignment for a dynamic adjustment by moving or deforming receiving optics (22), light receiver (24) and/or elements of the receiving optics (22), and **in that** the evaluation unit (26) comprises a manipulation control (32) in order to generate parameters and commands for the manipulation unit (30) which are required for a desired part of the light spot to impinge on the light receiver (24).

2. The sensor (10) according to claim 1,
which has a light transmitter (14) whose light generates the light spot.

3. The sensor (10) according to claim 1 or 2,
wherein the manipulation unit (30) is configured to adjust the part of the light spot according to an attenuation factor.

4. The sensor (10) according to any of the preceding claims,
wherein the evaluation unit (30) is configured for a level measurement (34) of the received signal.

5. The sensor (10) according to any of the preceding claims,
wherein the evaluation unit (30) comprises a control (36) for maintaining the level in a dynamic range.

6. The sensor (10) according to any of claims 1 to 4,
wherein the evaluation unit (26) is configured to perform a measurement several times at different parts, set by means of the manipulation unit (30), of the light spot impinging on the light receiver (24).

7. The sensor (10) according to any of the preceding claims,
wherein the manipulation unit (30) is configured for a focus adjustment of the receiving optics (22), a lateral displacement and/or a tilting.

8. The sensor (10) according to any of the preceding claims,
wherein the manipulation unit (30) comprises a moving coil or a piezo actuator.

9. The sensor (10) according to any of the preceding claims,
wherein the manipulation unit (30) comprises an adaptive lens, in particular a liquid lens.

10. The sensor (10) according to any of the preceding claims,
wherein the light receiver (24) is formed as a line with a plurality of light receiving elements and the manipulation unit (30) is configured for a displacement or deformation of the light spot transversely to the line.

11. The sensor (10) according to any of claims 1 to 9,
wherein the light receiver (24) is formed as a matrix of light receiving elements and the receiving optics (22) comprises a microlens array.

12. A method for detecting object information from a monitored area (12), wherein receiving optics (22) generate a light spot on a light receiver (24) and a received signal of the light receiver (24) is evaluated in an evaluation unit (26) in order to obtain the object information, wherein receiving optics (22), light receiver (24) and/or elements of the receiving optics (22) are varied by a manipulation unit (30) in such a way that the part of the light spot impinging on the light receiver (24) changes,
**characterized in that** for an intended misalignment for a dynamic adjustment receiving optics (22), light receiver (24) and/or elements of the receiving optics (22) are deformed or moved, and **in that** the evaluation unit (26) has a manipulation control (32) wherein parameters and commands required for a desired proportion of the light spot which is to impinge on the light receiver (24) are generated for the manipulation unit (30).

## Revendications

1. Capteur optoélectronique (10) pour la détection d'informations d'objet en provenance d'une zone à surveiller (12), comportant un récepteur de lumière (24), une optique de réception (22) associée au récepteur de lumière (24) et destinée à générer une tache lumineuse sur le récepteur de lumière (24), une unité d'évaluation (26) pour générer les informations d'objet à partir d'un signal de réception du récepteur de lumière (24), et une unité de manipulation (30) pour varier l'optique de réception (22), le récepteur de lumière (24) et/ou des éléments de l'optique de réception (22) de telle sorte que la proportion de la tache lumineuse qui tombe sur le récepteur de lumière (24) se modifie,
**caractérisé en ce que**
l'unité de manipulation (30) est réalisée pour un désajustement ciblé en vue d'une adaptation de la dynamique par déplacement ou déformation de l'optique de réception (22), du récepteur de lumière (24) et/ou des éléments de l'optique de réception (22), et **en ce que**
l'unité d'évaluation (26) comprend une commande de manipulation (32) pour générer, pour l'unité de manipulation (30), des paramètres et des ordres requis pour obtenir une proportion désirée de la tache lumineuse destinée à tomber sur le récepteur de lumière (24).

2. Capteur (10) selon la revendication 1,
comportant un émetteur de lumière (14) dont la lumière génère la tache lum ineuse.

3. Capteur (10) selon la revendication 1 ou 2,
dans lequel l'unité de manipulation (30) est réalisée pour régler la proportion de la tache lumineuse en correspondance d'un facteur d'atténuation.

4. Capteur (10) selon l'une des revendications précédentes,
dans lequel l'unité d'évaluation (30) est réalisée pour une mesure (34) du niveau du signal de réception.

5. Capteur (10) selon l'une des revendications précédentes,
dans lequel l'unité d'évaluation (30) présente une régulation (36) pour maintenir le niveau dans une gamme dynamique.

6. Capteur (10) selon l'une des revendications 1 à 4,
dans lequel l'unité d'évaluation (26) est réalisée pour effectuer une mesure plusieurs fois à différentes proportions de la tache lumineuse tombant sur le récepteur de lumière (24), réglées au moyen de l'unité de manipulation (30).

7. Capteur (10) selon l'une des revendications précédentes,
dans lequel l'unité de manipulation (30) est réalisée pour un réglage de la mise au point de l'optique de réception (22), pour une translation latérale et/ou pour une inclinaison.

8. Capteur (10) selon l'une des revendications précédentes,
dans lequel l'unité de manipulation (30) comporte une bobine mobile ou un actionneur piézoélectrique.

9. Capteur (10) selon l'une des revendications précédentes,
dans lequel l'unité de manipulation (30) comprend une lentille adaptative, en particulier une lentille à base liquide.

10. Capteur (10) selon l'une des revendications précédentes,
dans lequel le récepteur de lumière (24) est réalisé sous la forme d'une ligne ayant plusieurs éléments récepteurs de lumière, et l'unité de manipulation (30) est réalisée pour une translation ou une déformation de la tache lumineuse transversalement à la ligne.

11. Capteur (10) selon l'une des revendications 1 à 9,
dans lequel le récepteur de lumière (24) est réalisé sous forme de matrice d'éléments récepteurs de lumière, et l'optique de réception (22) présente un champ de microlentilles.

12. Procédé pour la détection d'informations d'objet en provenance d'une zone à surveiller (12), dans lequel une optique de réception (22) génère une tache lumineuse sur un récepteur de lumière (24), et un signal de réception du récepteur de lumière (24) est évalué dans une unité d'évaluation (26) pour obtenir les informations d'objet, l'optique de réception (22), le récepteur de lumière (24) et/ou des éléments de l'optique de réception (22) sont variés par une unité de manipulation (30) de telle sorte que la proportion de la tache lumineuse qui tombe sur le récepteur de lumière (24) se modifie,
**caractérisé en ce que**
en vue d'un désajustement ciblé pour l'adaptation de la dynamique, l'optique de réception (22), le récepteur de lumière (24) et/ou des éléments de l'optique de réception (22) sont déformés ou déplacés, et **en ce que** l'unité d'évaluation (26) comprend une commande de manipulation (32) dans laquelle des paramètres et des ordres requis pour obtenir une proportion désirée de la tache lumineuse destinée à tomber sur le récepteur de lumière (24) sont générés pour l'unité de manipulation (30).
